# EUROPÄISCHE PATENTSCHRIFT

(11) **EP 2 886 327 B1**
(45) Veröffentlichungstag und Bekanntmachung des Hinweises auf die Patenterteilung: **16.03.2016**
(21) Anmeldenummer: 13199266.1
(22) Anmeldetag: 22.12.2013
(51) Int. Cl.: B32B 5/26

(54) **Mikrofaser-Textilverbund**
Microfibre textile composite
Composite textile en microfibre

(43) Veröffentlichungstag der Anmeldung: 24.06.2015
(73) Patentinhaber: Eurotex GmbH, 33729 Bielefeld (DE)
(72) Erfinder: Snelders, Johannes Henrikus Petrus, 33617 Bielefeld (DE)
(74) Vertreter: Wickord, Wiro

(56) Entgegenhaltungen:
- DE-B3- 10 319 416

## Beschreibung

Die Erfindung betrifft einen Mikrofaser-Textilverbund mit einem Basisgewebe, bestehend aus einer Trägerschicht als Gewebe, Gewirke oder Vlies aus synthetischen und/oder natürlichen Materialien und einer auf eine Oberfläche der Trägerschicht angeordneten Schaumschicht auf der Basis von Polyurethanschaum, der eine offenporige und atmungsaktive Struktur aufweist, sowie dessen Herstellung und dessen Verwendung als Polsterbezug für Sitz- und Liegemöbel.

Der Einsatz von Textilverbünden mit Polyurethanschaum ist als Polsterbezug von Polstermöbeln bekannt. In der Regel ist bei diesen Textilverbünden ein textiles Gewebe oder Vliesstoff als Trägermaterial mit einer Beschichtung aus Polyurethan verbunden. Dabei wird zuerst das Trägermaterial mit einer Polyurethankleber Ausrüstung versehen. Das so vorbereitete Trägermaterial wird über Walzen durch Tanks mit einer Lösung aus Wasser, Polyurethanharzen, Füllstoffen und Lösungsmittel geführt. Dabei wird es in einem Koagulationsverfahren über Umlenkwalzen immer wieder abgequetscht und wieder getaucht, so dass sich nach und nach eine Polyurethan-Schaumschicht aufbaut. Das so entstandene Basisgewebe wird nun im Trockenverfahren oder Nassverfahren mit einer Deckschicht versehen.

Beim Trockenverfahren wird ein Film auf der Oberfläche eines Trennpapiers unter Verwendung einer Polyurethanlösung oder eines lösemittelbasierten Polyurethanharzes gebildet. So wird beispielsweise eine lösemittelbasierte Polyurethanlösung auf ein Trennpapier, das spiegelbildlich eingeprägt bereits das Narbenbild des späteren Endproduktes trägt, aufgeschichtet und getrocknet, wodurch ein Film auf dem Trennpapier entsteht. Dann wird das so entstandene Trennpapier an das Basisgewebe gebunden, das mit einem Klebstoff beschichtet ist, und getrocknet, und das Trennpapier wird von dem Film abgezogen, wodurch der endgültige Film auf dem Kunstledergewebe entsteht.

Beim Nassverfahren wird ein Harz verwendet, wie beispielsweise ein lösemittelbasiertes Polyurethanharz, das in der Lage ist, einen Film zu bilden, der auf die Oberfläche des Basisgewebes aufgelegt wird. Alternativ kann ein Polyurethanharz auf die Oberfläche des Basisgewebes beispielsweise durch Gravurbeschichten aufgeschichtet werden, wodurch ein Film gebildet wird. Darüber hinaus kann ein Nass-/Trockenverfahren, bei dem ein Trennpapier an dem entstandenen Film angebracht wird, verwendet werden.

Die Deckschicht ist bereits in der gewünschten Farbe des Endproduktes eingefärbt bzw. pigmentiert. Darüber hinaus kann der Textilverbund durch Bedrucken mit Hilfe von Druckwalzen oder durch Prägen unter Einsatz von Prägewalzen weiter veredelt werden.

Jedoch weist der Textilverbund, der nach dem oben beschriebenen herkömmlichen Verfahren hergestellt wird, keine ausreichende Luftdurchlässigkeit auf, da die Oberfläche des Verbundes vollständig mit dem Film bedeckt ist. Darüber hinaus werden bei der Verwendung von Lösemitteln Kontaminierungsstoffe, wie zum Beispiel flüchtige organische Verbindungen, und Gerüche verursacht, und besonders nachteilig ist der Einsatz von Lösungsmitteln nicht umweltfreundlich und können darüber hinaus für den Menschen gesundheitsschädlich sein.

Andererseits sind in der EP 2 472 003 A1 ein Mikrofaser-Kunstleder und sein Herstellungsverfahren beschrieben, in dem Mikrofasern als Florkette auf verstärkte Fäden als Grundkette und Grundschuss gewebt werden. Durch Schneiden der Grundketten können aus dem zweischichtigen Florgewebe zwei einschichtige Florgewebe gebildet werden. Danach wird das Florgewebe durch Eintauchen in Polyurethan-Flüssigkeit aufgefüllt und weiterhin mit einer Fällflüssigkeit behandelt, gewaschen und getrocknet, so dass das Polyurethan in dem Florgewebe eine schwammartige kontinuierliche mikroporöse Membran bilden kann. Bei diesem Verfahren werden lediglich Mikrofasern in das Gewebe der Trägerschicht gewoben, um dem Kunstleder die Eigenschaften einer niedrigeren Dehnung und besseren Weichheit zu geben.

In der EP 1 707 666 A1 wird ein synthetisches Leder und ein Verfahren zu dessen Herstellung und dessen Verwendung beschrieben, wobei zuerst auf einen Mikrofaservliesstoff eine Haftvermittlerschicht und darauf eine Schicht aus offenporigem Polyurethanschaum aufgetragen werden. Des Weiteren wird auf die Polyurethan-Schaumschicht eine weitere Haftvermittlerschicht aufgetragen, auf die ein weiterer Mikrofaservliesstoff aufgebracht wird. Danach wird der erzeugte Verbundstoff im Bereich der Polyurethanschaumschicht gespalten und die entstandenen Oberflächen geschliffen. Bei diesem Verfahren wird der Mikrofaservliesstoff als Trägerschicht für zwei einschichtige Basisgewebe verwendet, deren sichtbare Oberflächen durch Schleifen der Oberfläche des Polyurethanschaums veredelt werden.

In der EP 1 300 508 A2 wird ein Mikrofaserfilz beschrieben, bei dem die Mikrofaser nach der Sea-Island-Methode als Zweikomponentenfaser gefertigt ist, um daraus einen Filz zu bilden. Durch Behandlung mit Lösungsmitteln wird die Sea-Komponente der Mikrofaser entfernt. Anschließend erfolgt eine Imprägnierung mit einer Polyurethanlösung oder -emulsion. Der imprägnierte Filz wird gespalten und gefärbt. Dieses Verfahren führt zu einem nicht-gewobenen Mikrofaserprodukt, mit Oberflächen gekennzeichnet durch das Fehlen von Mikrofasergewebe.

Der Erfindung liegt die Aufgabe zugrunde, einen Textilverbund der eingangs genannten Art mit einer Deckschicht herzustellen, die besonders hautfreundlich ist und deren Textur besonders angenehm empfunden wird. Darüber hinaus ist der Textilverbund verschleißfester, geruchlos, frei von schädlichen Lösemitteln, kostengünstig und kontinuierlich als Rollenware herstellbar und hat eine gute Weiterverarbeitbarkeit.

Diese Aufgabe wird durch die Merkmale des Anspruchs 1 und ein Verfahren gemäß Anspruch 13 gelöst. Die Verwendung ist in Anspruch 22 angegeben. Ausführungsformen der Erfindung sind in den Unteransprüchen beschrieben.

Die Aufgabe wird erfindungsgemäß dadurch gelöst, dass der Mikrofaser-Textilverbund eine auf der freien Oberfläche der Polyurethan-Schaumschicht angeordnete Deckschicht aus Mikrofasergewebe aufweist. Das Mikrofasergewebe ist mit Hilfe eines Klebstoffs auf der Schaumschicht kaschiert, wobei zwischen der freien Oberfläche der Schaumschicht und der der sichtbaren Oberfläche abgewandten Seite der Deckschicht eine erste Klebstoffschicht vorgesehen ist. Bei dem Mikrofasergewebe handelt es sich um ein durch Weben von Mikrofasern hergestelltes Gewebe, bei dem mindestens zwei Fadensysteme, die Kette (Kettfäden) und der Schuss (Schussfäden), rechtwinklig verkreuzt werden. Die vorgespannten Kettfäden bilden den Träger, in den nacheinander die Schussfäden von einer Webkante zur anderen durch die gesamte Webbreite eingezogen werden. Bevorzugt werden für die Mikrofasern des Mikrofasergewebes Polyesterfasern mit der Struktur Sea-Island Garn und/oder Drawn-Textured Garn eingesetzt.

Mikrofasern sind Chemiefasern, die deutlich feiner als alle natürlichen Faserarten sind. Die Feinheit seiner Fasern bewirkt, dass das Mikrofasergewebe sich nicht nur geschmeidig und weich anfühlt, sondern auch einen leicht fließenden Fall, eine sehr gute Knitterarmut und eine hohe Pflegeleichtigkeit aufweist. Im Mikrofasergewebe liegen die Mikrofasern so dicht aufeinander, dass es für Wasserdampf durchlässig ist, Wassertropfen aber abperlen. Gleichzeitig erhält die menschliche Haut die Möglichkeit atmen zu können. Ein Sauna-Effekt wird von diesem Mikrofasergewebe dadurch verhindert, dass Körperschweiß und Körperfeuchtigkeit ungehindert verdunsten können. Das Mikrofasergewebe ist deshalb atmungsaktiv, wodurch es besonders für den Einsatz in Sitz- und Liegemöbeln geeignet ist.

Bei der erfindungsgemäßen Lösung wird das Basisgewebe, anstelle eines Films aus lösemittelhaltigen Polyurethanharz, mit einem lösemittelfreien Mikrofasergewebe verbunden, um eine Addierung der jeweiligen günstigen Materialeigenschaften zu erzielen, welche zum einen der Polyurethanschaum mit seiner offenporigen und atmungsaktiven Struktur und zum anderen das Mikrofasergewebe mit seinen wasserdampfdurchlässigen Eigenschaften aufweisen.

Das erfindungsgemäße Verfahren zur Herstellung des Mikrofaser-Textilverbunds sieht vor, zunächst die Oberseite die Trägerschicht mit einer pastösen Lösung von Polyurethanharz in Dimethylformamid (DMF) zu beschichten und anschließend durch Wasserbäder mit abnehmender DMF-Konzentration und zum Schluss durch reines Wasser zu führen. Durch einen Phasentransfer entsteht dabei aus der Lösung des Polyurethans in DMF ein Polyurethanschaum. Die Fällungsreaktion verläuft dabei im Koagulationsverfahren langsam von außen nach innen, wobei das Wasser in die Schicht eindringt und dort das DMF verdrängt. Nach dem vollständigen Austausch von DMF durch Wasser wird das hierdurch entstandene Basisgewebe getrocknet. Als Folge der Wärmeentwicklung beim Mischen von DMF und Wasser erhält man die Schaumschicht, die aufgrund von Wasserstoff-Brückenbindungen auf der Oberseite der Trägerschicht haftet, und eine voluminöse, offenporige Struktur aufweist. Die Deckschicht wird durch Weben der Mikrofasern zum Mikrofasergewebe hergestellt, wobei die Mikrofasern als Kettfäden und Schussfäden rechtwinklig verkreuzt werden. In einem zweiten Schritt wird die der sichtbaren Oberfläche abgewandte Seite der Deckschicht mit Hilfe des Klebstoffs auf die Schaumschicht kaschiert. Durch die Kaschierung erhält man einen Mikrofaser-Textilverbund, der besonders hautfreundlich ist. Als Folge des Kaschiervorgangs geht die Gesamtdicke des Mikrofaser-Textilverbunds zurück.

Eine vorteilhafte Weiterbildung des erfindungsgemäßen Mikrofaser-Textilverbunds sieht vor, dass zwischen der Deckschicht aus Mikrofasergewebe und der mit Polyurethanschaum beschichteten Trägerschicht zusätzlich eine Aufbauschicht aus Vliesstoff angeordnet ist. Die Aufbauschicht ist zwischen Deckschicht und Schaumschicht mit Hilfe des Klebstoffs kaschiert, wobei zwischen der Aufbauschicht und der der sichtbaren Oberfläche abgewandten Seite der Deckschicht die erste Klebstoffschicht und zwischen der freien Oberfläche der Schaumschicht und der Aufbauschicht eine zweite Klebstoffsschicht vorgesehen sind. Bei dem Vliesstoff handelt es sich um ein Flächengebilde aus orientierten oder wirr abgelegten Textilfasern, die durch verschiedene Verfahren Flore bzw. Filamente bilden, die in physikalischen oder chemischen Verfahren verfestigt werden. Hierbei werden durch Reibung und/oder Kohäsion und/oder Adhäsion und/oder Nadeln die Textilfasern zum Vliesstoff verbunden, der dann eine mechanische Festigkeit aufweist. Die Textilfasern können natürlichen oder künstlichen Ursprungs sein, deren Zusammenhalt durch die den Fasern eigene oder durch Präparation erzielte Haftung gegeben ist. Hierbei können die Fasern neben Druck auch Zugbelastungen aufnehmen, im Gegensatz zu einem Schaumstoffmaterial. Der Vliesstoff weist eine gewisse Schubelastizität auf, die Relativbewegungen zwischen der Deckschicht und der Trägerschicht ausgleichen kann. Hierdurch erhält der Mikrofaser-Textilverbund eine schubweiche Haptik und eine sichere Haftung der Deckschicht.

Bei dem Klebstoff kann vorzugsweise ein Polyurethan-Schmelzklebstoff eingesetzt werden, der beispielsweise durch einen Raupenauftrag auf die erste Seite der Klebestelle aufgetragen wird und durch Druck und Kühlung eine Klebereaktion mit der zweiten Seite der Klebestelle eingeht, wobei eine Aktivierungstemperatur von 60 bis 80 °C eingestellt ist. Oder es kann als Klebstoff ein Kontaktklebstoff auf Wasserbasis eingesetzt werden, der beispielsweise durch einen Sprüh- oder Pinselauftrag auf die erste Seite und auch auf die zweite Seite der Klebestelle aufgetragen wird und beide Seiten der Klebestelle durch Druck eine Klebereaktion eingehen, wobei eine Wärmeaktivierung hilfreich ist.

Als Mikrofasern des Mikrofasergewebes werden vorzugsweise Polyesterfasern eingesetzt. Gewebe aus Polyesterfasern oder Mischungen mit einem entsprechend hohen Anteil an Polyester besitzen eine geringe Knitterneigung und behalten ihre Formbeständigkeit auch bei Einwirkung von Feuchtigkeit. Zugleich verfügt die Faser über einen guten Feuchtigkeitstransport und das Gewebe trocknet daher sehr schnell. Die Kapillarwirkung der offenen Poren des Polyesters sorgt dafür, dass die Feuchtigkeit, wie beispielsweise Schweiß, abgeleitet wird, so dass die Haut trocken bleibt. Die Mikrofasern bzw. das Mikrofasergewebe werden mit Dispersionsfarbstoffen gefärbt werden. Bei Dispersionsfarbstoffen handelt es sich um Pigmente, die auf Grund ihrer sehr geringen Teilchengröße und durch den Zusatz von Netzmitteln in Wasser sehr leicht dispergieren. Nur mit ihnen lassen sich auf Polyester wasch- und lichtechte Färbungen erzielen.

Mit der Gestaltung der sichtbaren Oberfläche wird dem erfindungsgemäßen Mikrofaser-Textilverbund die gewünschte Textur bzw. das gewünschte Aussehen gegeben. Zur Oberflächengestaltung gehört zum einen die Narbenstruktur, die mittels einer Prägewalze auf die sichtbare Oberfläche der Deckschicht geprägt wird. Dabei weist die Prägewalze eine der Narbenstruktur entsprechend strukturierte Oberfläche auf. Entsprechend des Narbenbildes lässt sich die Oberflächenstruktur dem natürlichen Leder einer Tierart zuordnen. Zum anderen kann die sichtbare Oberfläche der Deckschicht eine unregelmäßig wellige Struktur aufweisen, die in einem Waschvorgang bei einer Wassertemperatur von mindestens 80 °C mittels einer Walze auf die sichtbare Oberfläche der Deckschicht eingebracht wird. Hierdurch erhalt man einen Mikrofaser-Textilverbund mit einer sichtbaren Oberfläche, deren Textur besonders angenehm empfunden wird. Die Oberfläche des Textilverbunds kann entweder mit der Narbenstruktur oder mit der unregelmäßig welligen Struktur ausgeführt sein. Die Oberfläche des Textilverbunds kann auch mit beiden Strukturen zusammen ausgeführt sein oder ebenso keine der beiden Strukturen aufweisen.

In aufgeschäumter Form ist Polyurethan ein dauerelastischer Weichschaumstoff mit vielen positiven Eigenschaften. Die offenporige und atmungsaktive Struktur des Polyurethanschaums ermöglicht eine gute Wasserdampfzirkulation. Entstehende Feuchtigkeit, wie beispielsweise Schweiß, wird von der Haut weg transportiert, so dass Wärmestauungen sicher verhindert werden. Hierdurch sind ein idealer Temperaturausgleich und ein angenehmes Sitz- und Liegeklima beim Einsatz als Polsterbezug für ein Polstermöbel gewährleistet. Polyurethan-Weichschaumstoff kann den Anforderungen entsprechend in den unterschiedlichsten Härten und Rohdichten hergestellt werden. Außerdem ist Polyurethan-Weichschaumstoff extrem belastbar und langzeitelastisch.

In einer bevorzugten Ausführungsform des Mikrofaser-Textilverbunds ist die Deckschicht vollständig aus Mikrofasergewebe gebildet, welches eine hervorragende Atmungsaktivität kennzeichnet und bei dem keinerlei Lösungsmittel verwendet werden. Dabei weist das Mikrofasergewebe eine Dicke zwischen 0,7 mm und 1,1 mm und eine Fadendichte zwischen 75D*225D und 105D*180D auf. Die Fadendichte ist die Anzahl der Kettfäden und Schussfäden pro cm Mikrofasergewebelänge. Aufgrund der hohen Fadendichte weist das Mikrofasergewebe eine hohe Strapazierfähigkeit und Reißfestigkeit auf. Der Polyurethanschaum liegt in einer Stärke von 0,55 mm und einem Gewicht von 250 g/qm vor. Weiterhin verfügt die textile Trägerschicht über eine Dicke zwischen 0,52 mm und 0,56 mm. Allerdings geht die Gesamtdicke des Mikrofaser-Textilverbunds nach den Kaschierungsvorgängen zurück.

Gegenstand der Erfindung ist auch die Verwendung des oben beschriebenen Mikrofaser-Textilverbunds als Polsterbezug für Sitz- und Liegemöbel, wobei der Polsterbezug das Füllmaterial für die Federung, Isolierung oder Wattierung an diesen Möbeln bedeckt. Zum Beispiel bezieht man einen Sessel, eine Couch oder eine gepolsterte Sitzfläche an Stühlen mit einem Polsterbezug. Des Weiteren wird dieser Mikrofaser-Textilverbund auch als Bezug von Kissen eingesetzt, wo er mit Farben und Struktur entscheidend zum Ambiente des Raums beiträgt und gleichzeitig den persönlichen Stil widerspiegelt.

Die Erfindung ist nachfolgend anhand von bevorzugten Ausführungsbeispielen unter Bezugnahme auf die Abbildungen beispielhaft erläutert. Dabei zeigt schematisch:
Fig. 1 den Aufbau der bevorzugten Ausführungsform des erfindungsgemäßen Mikrofaser-Textilverbunds im Querschnitt,
Fig. 2 den Aufbau einer Weiterbildung des erfindungsgemäßen Mikrofaser-Textilverbunds im Querschnitt,
Fig. 3 das Ablaufdiagramm des Verfahrens zur Herstellung des Mikrofaser-Textilverbunds.

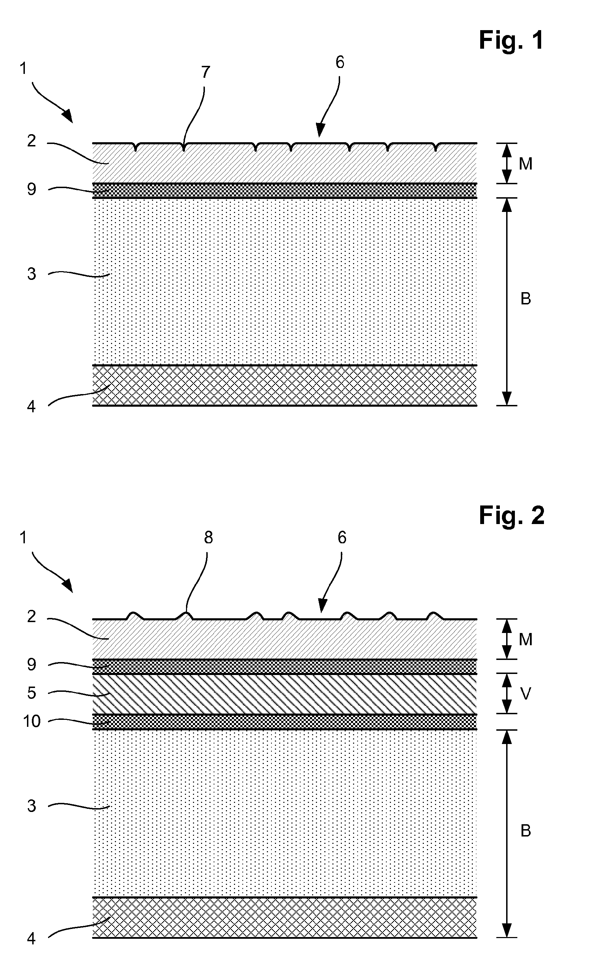

Fig. 1 zeigt schematisch den Aufbau der bevorzugten Ausführungsform des erfindungsgemäßen Mikrofaser-Textilverbunds 1 im Querschnitt. Der Mikrofaser-Textilverbund 1 besteht aus einer Deckschicht 2 aus Mikrofasergewebe M und einem Basisgewebe B, das aus einer Trägerschicht 4 und einer Schaumschicht 3 zusammengesetzt ist.

Dabei sind das Mikrofasergewebe M und das Basisgewebe B durch die erste Klebstoffschicht 9 miteinander verbunden.

Die sichtbare Oberfläche 6 des Mikrofasergewebes M ist beispielhaft mit einer Narbenstruktur 7 dargestellt, die auch eine unregelmäßig wellige Struktur 8, oder eine Kombination von beiden Strukturen 7, 8 sein kann. Ebenfalls kann die sichtbare Oberfläche 6 auch keine der beiden genannten Strukturen 7, 8 aufweisen.

Fig. 2 zeigt schematisch den Aufbau einer Weiterbildung des erfindungsgemäßen Mikrofaser-Textilverbunds 1 im Querschnitt. Dabei besteht der Mikrofaser-Textilverbund 1 aus einer Deckschicht 2 aus Mikrofasergewebe M und einer Aufbauschicht 5 aus Vliesstoff V sowie einem Basisgewebe B, das aus einer Trägerschicht 4 und einer Schaumschicht 3 zusammengesetzt ist.

Das Mikrofasergewebe M und der Vliesstoff V sind durch die erste Klebstoffschicht 9 miteinander verbunden. Des Weiteren sind der Vliesstoff V und das Basisgewebe B durch die zweite Klebstoffschicht 10 miteinander verbunden.

Die sichtbare Oberfläche 6 des Mikrofasergewebes M ist beispielhaft mit einer unregelmäßig welligen Struktur 8 dargestellt, die auch eine Narbenstruktur 7, oder eine Kombination von beiden Strukturen 7, 8 sein kann. Ebenfalls kann die sichtbare Oberfläche 6 auch keine der beiden genannten Strukturen 7, 8 aufweisen.

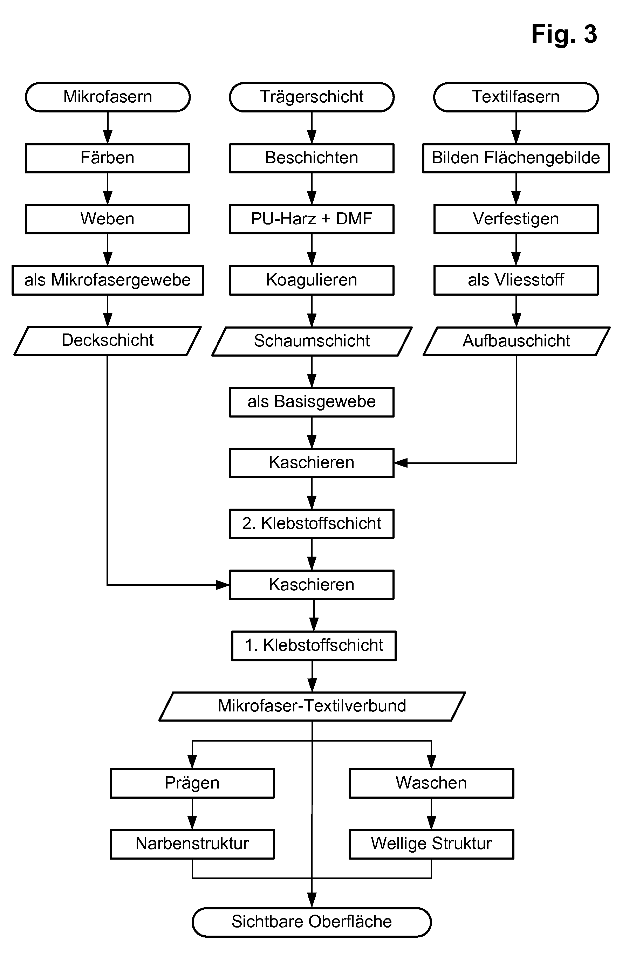

Der erfindungsgemäße Mikrofaser-Textilverbund wird mit dem im schematischen Ablaufdiagramm der Fig. 3 dargestellten Verfahren hergestellt.

Die Deckschicht 2 wird durch Weben von Mikrofasern derart gebildet, dass Kettfäden und Schussfäden rechtwinklig miteinander verkreuzt werden. Hierdurch entsteht das Mikrofasergewebe M, das durch Färben der Fasern oder des Gewebes seine gewünschte Farbe erhält.

Das Basisgewebe B wird im Koagulationsverfahren, auch DMF-Koagulation oder wet process genannt, gebildet. In diesem Verfahren wird die textile Trägerschicht 4 mit einer pastösen Lösung von Polyurethanharz in Dimethylformamid (DMF) entweder durch Tauchung oder Rakeln beschichtet. Anschließend wird die textile Trägerschicht 4 durch mehrere nachfolgende, im Gegenstrom laufende Wasserbäder geführt. Dabei löst sich das Lösungsmittel DMF in der wässrigen Phase und das Polyurethanharz, da unlöslich in Wasser, bleibt als offenporige Schaumschicht 3 auf der textilen Trägerschicht 4 zurück.

Anschließend werden das Mikrofasergewebe M und das Basisgewebe B mittels Klebstoff kaschiert bzw. durch die erste Klebstoffschicht 9 miteinander verbunden.

Der so erhaltene Mikrofaser-Textilverbund 1 weist den in Fig. 1 dargestellten Aufbau auf.

Die Weiterbildung des erfindungsgemäßen Mikrofaser-Textilverbunds 1 schließt das Bilden der Aufbauschicht 5 ein, die durch Bilden eines Flächengebildes, wie beispielsweise Faserflor oder Filamentflor, aus Textilfasern und dessen mechanische, thermische oder chemische Verfestigung zu einem Vliesstoff V gebildet wird.

Anschließend werden der Vliesstoff V und das Basisgewebe B mittels Klebstoff kaschiert bzw. durch die zweite Klebstoffschicht 10 miteinander verbunden. Danach werden das Mikrofasergewebe M und der Vliesstoff V mittels Klebstoff kaschiert bzw. durch die erste Klebstoffschicht 9 miteinander verbunden.

Der Mikrofaser-Textilverbund 1 mit einer zusätzlichen Aufbauschicht 5 weist den in Fig. 2 dargestellten Aufbau auf.

Darüber hinaus gibt es weitere Verfahrensschritte, mit denen der zuvor hergestellte Mikrofaser-Textilverbund 1 weiter veredelt werden kann. Die sichtbare Oberfläche 6 kann durch Prägen mittels einer Prägewalze eine Narbenstruktur 7, oder in einem Waschvorgang mittels einer Walze eine unregelmäßig wellige Struktur 8 erhalten. Gleichermaßen können auch beide Verfahrensschritte miteinander kombiniert werden oder sogar gänzlich fehlen.

### Bezugszeichen

- 1: Mikrofaser-Textilverbund
- 2: Deckschicht
- 3: Schaumschicht
- 4: Trägerschicht
- 5: Aufbauschicht
- 6: Sichtbare Oberfläche
- 7: Narbenstruktur
- 8: Wellige Struktur
- 9: Erste Klebstoffschicht
- 10: Zweite Klebstoffschicht
- B: Basisgewebe
- M: Mikrofasergewebe
- V: Vliesstoff

## Patentansprüche

1. Mikrofaser-Textilverbund (1) mit einem Basisgewebe (B), bestehend aus einer Trägerschicht (4) als Gewebe, Gewirke oder Vlies aus synthetischen und/oder natürlichen Materialien und einer auf eine Oberfläche der Trägerschicht angeordneten Schaumschicht (3) auf der Basis von Polyurethanschaum, der eine offenporige und atmungsaktive Struktur aufweist,
**dadurch gekennzeichnet,**
**dass** der Mikrofaser-Textilverbund (1) eine auf der freien Oberfläche der Schaumschicht (3) angeordnete Deckschicht (2) aus Mikrofasergewebe (M), das wasserdampfdurchlässig ist, sowie eine erste Klebstoffsschicht (9) zwischen dem Basisgewebe (B) und dem Mikrofasergewebe (M) aufweist, um eine Addierung der jeweiligen günstigen Materialeigenschaften zu erzielen.

2. Mikrofaser-Textilverbund (1) nach Anspruch 1, **dadurch gekennzeichnet,**
**dass** zwischen der Deckschicht (2) aus Mikrofasergewebe (M) und der mit Polyurethanschaum (3) beschichteten Trägerschicht (4) zusätzlich eine Aufbauschicht (5) aus Vliesstoff (V), bestehend aus synthetischen und/oder natürlichen Textilfasern, sowie eine zweite Klebstoffschicht (10) zwischen dem Basisgewebe (B) und dem Vliesstoff (V) angeordnet sind, um darüber hinaus eine Schubelastizität zu erzielen.

3. Mikrofaser-Textilverbund (1) nach Anspruch 1, **dadurch gekennzeichnet,**
**dass** die Mikrofasern des Mikrofasergewebes (M) Polyesterfasern mit der Struktur Sea-Island Garn und/oder Drawn-Textured Garn sind.

4. Mikrofaser-Textilverbund (1) nach Anspruch 1, **dadurch gekennzeichnet,**
**dass** das Mikrofasergewebe (M) eine Dicke zwischen 0,7 mm und 1,1 mm aufweist.

5. Mikrofaser-Textilverbund (1) nach Anspruch 1, **dadurch gekennzeichnet,**
**dass** das Mikrofasergewebe (M) eine Fadendichte zwischen 75D*225D und 105D*180D aufweist.

6. Mikrofaser-Textilverbund (1) nach Anspruch 1, **dadurch gekennzeichnet,**
**dass** die Mikrofasern oder das Mikrofasergewebe (M) gefärbt sind.

7. Mikrofaser-Textilverbund (1) nach Anspruch 1, **dadurch gekennzeichnet,**
**dass** die Deckschicht (2) eine Narbenstruktur (7) an ihrer sichtbaren Oberfläche (6) aufweist.

8. Mikrofaser-Textilverbund (1) nach Anspruch 1, **dadurch gekennzeichnet,**
**dass** die Deckschicht (2) eine unregelmäßig wellige Struktur (8) an ihrer sichtbaren Oberfläche (6) aufweist.

9. Mikrofaser-Textilverbund (1) nach Anspruch 1, **dadurch gekennzeichnet,**
**dass** der Klebstoff (9, 10) ein Polyurethan-Schmelzklebstoff oder ein Kontaktklebstoff auf Wasserbasis ist.

10. Mikrofaser-Textilverbund (1) nach Anspruch 1, **dadurch gekennzeichnet,**
**dass** der Polyurethanschaum (3) ein dauerelastsicher Weichschaumstoff ist.

11. Mikrofaser-Textilverbund (1) nach Anspruch 1, **dadurch gekennzeichnet,**
**dass** der Polyurethanschaum (3) eine Dicke von 0,55 mm und ein Gewicht von 250 g/qm aufweist.

12. Mikrofaser-Textilverbund (1) nach Anspruch 1, **dadurch gekennzeichnet,**
**dass** die Trägerschicht (4) eine Dicke zwischen 0,52 mm und 0,56 mm aufweist.

13. Verfahren zur Herstellung des Mikrofaser-Textilverbunds (1) nach einem der vorstehenden Ansprüche, mit den Schritten:
(i) Auftragen von Polyurethan auf die Oberseite der Trägerschicht (4),
(ii) Fällen des Polyurethans in Wasser zur Schaumschicht (3),
(iii) Weben von Mikrofasern zum Mikrofasergewebe (M),
(iv) Kaschieren des Mikrofasergewebes (M) mit dem Klebstoff (9) auf die Schaumschicht (3), wobei die Gesamtdicke des Mikrofaser-Textilverbunds (1) zurückgeht.

14. Verfahren nach Anspruch 13, **dadurch gekennzeichnet,**
**dass** das Auftragen von Polyurethan ein Beschichten der Oberseite der Trägerschicht (4) mit einer pastösen Lösung von Polyurethanharz in Dimethylformamid umfasst.

15. Verfahren nach Anspruch 13, **dadurch gekennzeichnet,**
**dass** das Fällen des Polyurethans ein Austausch des Dimethylformamids durch Wasser im Koagulationsverfahren und Trocknen des Basisgewebes (B) umfasst.

16. Verfahren nach Anspruch 13, **dadurch gekennzeichnet,**
**dass** das Weben von Mikrofasern ein rechtwinkliges Verkreuzen von Kettfäden und Schussfäden umfasst.

17. Verfahren nach Anspruch 13, mit den Schritten:
(i) Herstellen der Aufbauschicht (5) aus Vliesstoff (V),
(ii) Kaschieren der Aufbauschicht (5) mit dem Klebstoff (10) auf die Schaumschicht (3),
(iii) Kaschieren des Mikrofasergewebes (M) mit dem Klebstoff (9) auf die Aufbauschicht (5).

18. Verfahren nach Anspruch 17, **dadurch gekennzeichnet,**
**dass** das Herstellen der Aufbauschicht (5) ein Bilden eines Flächengebildes aus Textilfasern und dessen Verfestigung zu Vliesstoff (V) umfasst.

19. Verfahren nach Anspruch 13, **dadurch gekennzeichnet,**
**dass** die Mikrofasern oder das Mikrofasergewebe (M) mit Dispersionsfarbstoffen gefärbt werden.

20. Verfahren nach Anspruch 13, **dadurch gekennzeichnet,**
**dass** die Narbenstruktur (7) mittels einer Prägewalze, die eine der Narbenstruktur entsprechend strukturierte Oberfläche aufweist, auf die sichtbare Oberfläche (6) der Deckschicht (2) geprägt wird.

21. Verfahren nach Anspruch 13, **dadurch gekennzeichnet,**
**dass** die unregelmäßig wellige Struktur (8) in einem Waschvorgang bei einer Wassertemperatur von mindestens 80 °C mittels einer Walze auf die sichtbare Oberfläche (6) der Deckschicht (2) eingebracht wird.

22. Verwendung des Mikrofaser-Textilverbunds (1), nach einem der vorstehenden Ansprüche, als Polsterbezug für Sitz- und Liegemöbel, sowie als Bezug von Kissen.

## Claims

1. Microfibre textile composite (1) having a basic fabric (B) consisting of a carrier layer (4) as a woven fabric, knitted fabric or non-woven fabric made from synthetic and/or natural materials and a foam layer (3) disposed on a surface of the carrier layer and based on polyurethane foam which has an open-pore and breathable structure,
**characterised in that**
the microfibre textile composite (1) has a cover layer (2) made of microfibre fabric (M), which is permeable to water vapour, disposed on the free surface of the foam layer (3), and a first adhesive layer (9) between the base fabric (B) and the microfibre fabric (M) in order to achieve an accumulation of the respective favourable material properties.

2. Microfibre textile composite (1) as claimed in claim 1, **characterised in that** between the cover layer (2) made from microfibre fabric (M) and the carrier layer (4) covered with the polyurethane foam (3), a build-up layer (5) of non-woven material (V), consisting of synthetic and/or natural textile fibres, and a second adhesive layer (10) between the basic fabric (B) and the non-woven material (V) are additionally disposed in order moreover to achieve shear elasticity.

3. Microfibre textile composite (1) as claimed in claim 1, **characterised in that** the microfibres of the microfibre fabric (M) are polyester fibres having the Sea-Island yarn and/or Drawn-Textured yarn structure.

4. Microfibre textile composite (1) as claimed in claim 1, **characterised in that** the microfibre fabric (M) has a thickness between 0.7 mm and 1.1 mm.

5. Microfibre textile composite (1) as claimed in claim 1, **characterised in that** the microfibre fabric (M) has a yarn spacing between 75D*225D and 105D*180D.

6. Microfibre textile composite (1) as claimed in claim 1, **characterised in that** the microfibres or the microfibre fabric (M) is/are dyed.

7. Microfibre textile composite (1) as claimed in claim 1, **characterised in that** the cover layer (2) has a grained structure (7) on its visible surface (6).

8. Microfibre textile composite (1) as claimed in claim 1, **characterised in that** the cover layer (2) has an irregularly wavy structure (8) on its visible surface (6).

9. Microfibre textile composite (1) as claimed in claim 1, **characterised in that** the adhesive (9, 10) is a polyurethane hot melt adhesive or a water-based contact adhesive.

10. Mircofibre textile composite (1) as claimed in claim 1, **characterised in that** the polyurethane foam (3) is a permanently elastic flexible foam.

11. Microfibre textile composite (1) as claimed in claim 1, **characterised in that** the polyurethane foam (3) has thickness of 0.55 mm and a weight of 250 g/sqm.

12. Microfibre textile composite (1) as claimed in claim 1, **characterised in that** the carrier layer (4) has a thickness between 0.52 mm and 0.56 mm.

13. Method for producing the microfibre textile composite (1) as claimed in any one of the preceding claims, comprising the steps of:
(i) applying polyurethane to the top side of the carrier layer (4),
(ii) precipitating the polyurethane in water to form the foam layer (3),
(iii) weaving microfibres to form the microfibre fabric (M),
(iv) coating the microfibre fabric (M) with the adhesive (9) onto the foam layer (3), wherein the total thickness of the microfibre textile composite (1) decreases.

14. Method as claimed in claim 13, **characterised in that** applying polyurethane includes coating the top side of the carrier layer (4) with a pasty solution of polyurethane resin in dimethyl formamide.

15. Method as claimed in claim 13, **characterised in that** precipitating the polyurethane includes substituting the dimethyl formamide with water in the coagulation process and drying the basic fabric (B).

16. Method as claimed in claim 13, **characterised in that** weaving micro fibres includes crossing warp threads and weft threads at right angles.

17. Method as claimed in claim 13, comprising the steps of:
(i) producing the build-up layer (5) from non-woven material (V),
(ii) coating the build-up layer (5) with the adhesive (10) onto the foam layer (3),
(iii) coating the microfibre fabric (M) with the adhesive (9) onto the build-up layer (5).

18. Method as claimed in claim 17, **characterised in that** producing the build-up layer (5) includes forming a planar formation of textile fibres and compacting same to form non-woven material (V).

19. Method as claimed in claim 13, **characterised in that** the micro fibres or the microfibre fabric (M) is/are dyed using dispersion dyes.

20. Method as claimed in claim 13, **characterised in that** the grained structure (7) is embossed onto the visible surface (6) of the cover layer (2) by means of an embossing roller which has a surface which is structured so as to correspond to the grained structure.

21. Method as claimed in claim 13, **characterised in that** the irregularly wavy structure (8) is introduced onto the visible surface (6) of the cover layer (2) by means of a roller in a washing process at a water temperature of at least 80 °C.

22. Use of the microfibre textile composite (1) as claimed in any one of the preceding claims as an upholstery cover for furniture for sitting and lying on, as well as covers for cushions.

## Revendications

1. Composite textile en microfibre (1) comportant un tissu de base (B), constitué d'une couche de support (4) sous forme de tissu, tricot ou non-tissé en matériaux synthétiques et/ou naturels et d'une couche de mousse (3) disposée sur une surface de la couche de support sur la base de mousse polyuréthane, qui présente une structure à pores ouverts et respirante,
**caractérisé en ce que**
le composite textile en micro fibre (1) présente une couche de couverture (2) en tissu microfibre (M) disposée sur la surface libre de la couche de mousse (3), lequel tissu microfibre est perméable à la vapeur d'eau, ainsi qu'une première couche de colle (9) entre le tissu de base (B) et le tissu microfibre (M), pour atteindre une addition des propriétés des matériaux favorables respectives.

2. Composite textile en micro fibre (1) selon la revendication 1, **caractérisé en ce qu'**une couche constitutive (5) en non-tissé (V), constituée de fibres textiles synthétiques et/ou naturels est disposée en outre entre la couche de couverture (2) en tissu microfibre (M) et la couche de support (4) recouverte de mousse polyuréthane (3), ainsi qu'une seconde couche de colle (10) entre le tissu de base (B) et le non-tissé (V), pour obtenir en outre une élasticité de poussée.

3. Composite textile en micro fibre (1) selon la revendication 1, **caractérisé en ce que** les microfibres du tissu microfibre (M) sont des fibres polyester avec la structure de fil Sea Island et/ou de fil texturé par étirage.

4. Composite textile en microfibre (1) selon la revendication 1, **caractérisé en ce que** le tissu microfibre (M) présente une épaisseur entre 0,7 mm et 1,1 mm.

5. Composite textile en microfibre (1) selon la revendication 1, **caractérisé en ce que** le tissu microfibre (M) présente une épaisseur de fil entre 75D*225D et 105D*180D.

6. Composite textile en micro fibre (1) selon la revendication 1, **caractérisé en ce que** les micro fibres ou le tissu micro fibre (M) sont teintés.

7. Composite textile en micro fibre (1) selon la revendication 1, **caractérisé en ce que** la couche de couverture (2) présente une structure grenée (7) au niveau de sa surface visible (6).

8. Composite textile en micro fibre (1) selon la revendication 1, **caractérisé en ce que** la couche de couverture (2) présente une structure ondulée irrégulière (8) au niveau de sa surface visible (6).

9. Composite textile en micro fibre (1) selon la revendication 1, **caractérisé en ce que** la colle (9, 10) est une colle thermofusible polyuréthane ou une colle contact à base aqueuse.

10. Composite textile en micro fibre (1) selon la revendication 1, **caractérisé en ce que** la mousse polyuréthane (3) est une mousse souple à élasticité permanente.

11. Composite textile en micro fibre (1) selon la revendication 1, **caractérisé en ce que** la mousse polyuréthane (3) présente une épaisseur de 0,55 mm et un poids de 250 g/m².

12. Composite textile en micro fibre (1) selon la revendication 1, **caractérisé en ce que** la couche de support (M) présente une épaisseur entre 0,52 mm et 0,56 mm.

13. Procédé de fabrication du composite textile en microfibre (1) selon l'une des revendications précédentes, comportant les étapes de :
(i) application de polyuréthane sur la face supérieure de la couche de support (4),
(ii) précipitation du polyuréthane dans l'eau en une couche de mousse (3),
(iii) tissage de microfibres en un tissu microfibre (M),
(iv) dissimulation du tissu microfibre (M) avec la colle (9) sur la couche de mousse (3), l'épaisseur totale du composite textile en micro fibre (1) se résorbant.

14. Procédé selon la revendication 13, **caractérisé en ce que** l'application de polyuréthane comprend un revêtement de la face supérieure de la couche de support (4) avec une solution pâteuse d'une résine de polyuréthane en diméthylformamide.

15. Procédé selon la revendication 13, **caractérisé en ce que** la précipitation du polyuréthane comprend un remplacement du diméthylformamide par de l'eau dans un procédé de la coagulation et le séchage du tissu de base (B).

16. Procédé selon la revendication 13, **caractérisé en ce que** le tissage de microfibres comprend un entrelacement perpendiculaire de fils de chaîne et de fils de trame.

17. Procédé selon la revendication 13, comportant les étapes de :
(i) fabrication de la couche constitutive (5) en non-tissé (V),
(ii) dissimulation de la couche constitutive (5) avec la colle (10) sur la couche de mousse (3),
(iii) dissimulation du tissu microfibre (M) avec la colle (9) sur la couche constitutive (5).

18. Procédé selon la revendication 17, **caractérisé en ce que** la fabrication de la couche constitutive (5) comprend une formation d'une structure plane en fibres textile et sa consolidation en non-tissé (V).

19. Procédé selon la revendication 13, **caractérisé en ce que** les micro fibres ou le tissu microfibre (M) sont teintés avec des colorants dispersables.

20. Procédé selon la revendication 13, **caractérisé en ce que** la structure grenée (7) est gaufrée au moyen d'un cylindre de gaufrage, qui présente une surface structurée correspondant à la structure grenée, sur la surface visible (6) de la couche de couverture (2).

21. Procédé selon la revendication 13, **caractérisé en ce que** la structure ondulée irrégulière (8) est apportée dans un processus de lavage à une température de lavage d'au moins 80 °C au moyen d'un cylindre sur la surface visible (6) de la couche de couverture (2).

22. Utilisation du composite textile en microfibre (1) selon l'une des revendications précédentes, en tant que housse rembourrée pour meuble d'assise et de couchage, ainsi que housse de coussin.
